# EUROPEAN PATENT APPLICATION

(11) **EP 2 816 746 A1**
(43) Date of publication of application: **24.12.2014**
(21) Application number: 13785335.4
(22) Date of filing: 07.08.2013
(51) Int. Cl.: H04B 10/50, H01S 3/10

(54) **MULTI-WAVELENGTH LIGHT SOURCE DEVICE**

(30) Priority: 28.12.2012 CN 201210587190
(71) Applicant: Huawei Technologies Co., Ltd., Shenzhen, Guangdong 518129 (CN)
(72) Inventor: DAI, Xiquan, Shenzhen, Guangdong 518129 (CN)
(74) Representative: Lord, Michael
(86) International application number: PCT/CN2013/080962
(87) International publication number: WO 2014/101427

(57) **Abstract**

The present invention discloses a multi-wavelength light source apparatus. The multi-wavelength light source apparatus includes: a pump light source, configured to provide pump light; an erbium-doped optical fiber, configured to absorb energy of the pump light and emit wide-spectrum laser light; and an optical fiber, configured to filter the wide-spectrum laser light, and output a multi-wavelength optical signal in a free spectral range of the optical filter, where the multi-wavelength optical signal is incident on the erbium-doped optical fiber, and the erbium-doped optical fiber is further configured to re-amplify and output the incident multi-wavelength optical signal. In the multi-wavelength light source apparatus in the embodiments of the present invention, a wavelength of output light can be selected, spectral energy of the output light is concentrated, and power of the output light is high. In addition, the multi-wavelength light source apparatus in the embodiments of the present invention is insensitive to polarization, and has a simple structure and low costs.

## Description

### CROSS-REFERENCE TO RELATED APPLICATIONS

This application claims priority to Chinese Patent Application No. 201210587190.2, filed with the Chinese Patent Office on December 28, 2012 and entitled "MULTI-WAVELENGTH LIGHT SOURCE APPARATUS", which is incorporated herein by reference in its entirety.

### TECHNICAL FIELD

The present invention relates to the optical communications field, and in particular, to a multi-wavelength light source apparatus in the optical communications field.

### BACKGROUND

A multi-wavelength light source apparatus is required in wavelength-division multiplexing (Wavelength-Division Multiplexing, WDM for short) passive optical networks (Passive Optical Network, PON for short), density wavelength-division multiplexing systems (Density Wavelength-Division Multiplexing, DWDM for short), and testing of some passive optical components, and the multi-wavelength light source apparatus is capable of emitting multiple wavelengths at the same time.

Currently, a multi-wavelength light source apparatus is mainly implemented by a super luminescent diode/super-luminescent emitting diode (Super Luminescent Diode/Super-Luminescent Light Emitting Diode, SLD/SLED for short), an erbium-doped optical fiber amplified spontaneous emission light source (Erbium-doped Optical Fiber Amplified Spontaneous Emission, EDF-ASE for short) or a distributed feedback laser (Distributed Feedback Laser, DFB for short) array.

Specifically, the SLD/SLED can emit a wide-spectrum optical signal that meets a certain wavelength range. However, the SLD/SLED, as a signal light source carrying modulated data, has a defect that optical power is small in a unit wavelength, and the emitted wide-spectrum optical signal also has a certain state of polarization, which brings inconvenience for subsequent use. The erbium-doped optical fiber spontaneous emission light source (EDF-ASE) is a spontaneous emission light source based on an erbium-doped optical fiber and uses an erbium-doped optical fiber amplifier (Erbium-doped Optical Fiber Amplifier, EDFA for short) to emit a wide-spectrum optical signal, and can implement spontaneous emission at a C band or an F band by selecting different erbium-doped optical fibers and using pumps. Though light-emitting power of the EDF-ASE light source is significantly improved in comparison with that of the SLD, because a spectral width of an optical signal emitted by the EDF-ASE is wide, and a useful wavelength part only accounts for a small part of the entire spectrum, useful optical power per unit is low, which is inconvenient for use.

The DFB array uses multiple DFB lasers to form a laser array, to provide the required multiple wavelengths. For each single wavelength, monochromaticity is good and power is high. However, the DFB array requires complex wavelength temperature control, alignment and coupling are difficult, and costs are high. In addition, the DFB array also has the problem of a polarization state.

Therefore, a multi-wavelength light source apparatus with concentrated spectral energy and a simple structure is needed.

### SUMMARY

The present invention provides a multi-wavelength light source apparatus, where the multi-wavelength light source apparatus has concentrated spectral energy and a simple structure.

In a first aspect, an embodiment of the present invention provides a multi-wavelength light source apparatus, where the multi-wavelength light source apparatus includes: a pump light source, configured to provide pump light; an erbium-doped optical fiber, configured to absorb energy of the pump light and emit wide-spectrum laser light; and an optical filter, configured to filter the wide-spectrum laser light, and output a multi-wavelength optical signal in a free spectral range of the optical filter, where the multi-wavelength optical signal is incident on the erbium-doped optical fiber, and the erbium-doped optical fiber is further configured to re-amplify and output the incident multi-wavelength optical signal.

In a first possible implementation manner of the first aspect, the multi-wavelength light source apparatus further includes: a gain flatness filter, configured to filter the multi-wavelength optical signal output by the optical filter, and output the filtered multi-wavelength optical signal to the erbium-doped optical fiber for re-amplification.

In a second possible implementation manner of the first aspect, the multi-wavelength light source apparatus further includes: a gain flatness filter, configured to filter the multi-wavelength optical signal re-amplified and output by the erbium-doped optical fiber.

With reference to the first aspect or the first or second possible implementation manner of the first aspect, in a third possible implementation manner of the first aspect, the erbium-doped optical fiber includes a first erbium-doped optical fiber and a second erbium-doped optical fiber, where the first erbium-doped optical fiber is disposed between the pump light source and the optical filter, and is configured to generate the wide-spectrum laser light; and the second erbium-doped optical fiber is configured to re-amplify and output the multi-wavelength optical signal output by the optical filter.

With reference to the third possible implementation manner of the first aspect, in a fourth possible implementation manner of the first aspect, the multi-wavelength light source apparatus further includes: an optical splitter, configured to split the pump light emitted by the pump light source into two parts, where first part pump light is incident on the first erbium-doped optical fiber, and second part pump light is incident on the second erbium-doped optical fiber; and a first wavelength-division multiplexer, configured to combine the second part pump light with the multi-wavelength optical signal output by the optical filter, and transmit the combined light to the second erbium-doped optical fiber.

With reference to the fourth possible implementation manner of the first aspect, in a fifth possible implementation manner of the first aspect, the multi-wavelength light source apparatus further includes: a first optical isolator, disposed between the optical filter and the first wavelength-division multiplexer; and a second optical isolator, disposed between the second erbium-doped optical fiber and an output end of the multi-wavelength light source apparatus.

With reference to the first aspect or the first or second possible implementation manner of the first aspect, in a sixth possible implementation manner of the first aspect, the multi-wavelength light source apparatus further includes a second wavelength-division multiplexer and a reflector, where the pump light emitted by the pump light source passes through the second wavelength-division multiplexer and is incident on the erbium-doped optical fiber, and the multi-wavelength optical signal output by the optical filter is reflected back to the optical erbium-doped optical fiber by the reflector, re-amplified by the erbium-doped optical fiber, and output by the second wavelength-division multiplexer.

With reference to the sixth possible implementation manner of the first aspect, in a seventh possible implementation manner of the first aspect, the multi-wavelength light source apparatus further includes: a third optical isolator, disposed between the second wavelength-division multiplexer and an output end of the multi-wavelength light source apparatus.

With reference to the first aspect or any one implementation manner of the first to seventh possible implementation manners of the first aspect, in an eighth possible implementation manner of the first aspect, the pump light source is a pump laser, where the pump laser provides pump light with a central wavelength of 980 nm.

With reference to the first aspect or any one implementation manner of the first to seventh possible implementation manners of the first aspect, in a ninth possible implementation manner of the first aspect, the optical filter is a Fabry-Perot filter.

With reference to the first aspect or any one implementation manner of the first to seventh possible implementation manners of the first aspect, in a tenth possible implementation manner of the first aspect, a wavelength of the multi-wavelength optical signal falls in a range from 1528 nm to 1565 nm, or in a range from 1565 nm to 1625 nm.

Based on the foregoing technical solution, in the multi-wavelength light source apparatus in the embodiments of the present invention, the optical filter is capable of selectively outputting the optical signal with the required wavelength, and transmitting the optical signal to the erbium-doped optical fiber for re-amplification, so that spectral energy of the output light is concentrated, and power of the output light is increased. In addition, the multi-wavelength light source apparatus in the embodiments of the present invention is insensitive to polarization, and has a simple structure and low costs.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of a multi-wavelength light source apparatus according to an embodiment of the present invention;
FIG. 2 is another schematic block diagram of a multi-wavelength light source apparatus according to an embodiment of the present invention;
FIG. 3 is yet another schematic block diagram of a multi-wavelength light source apparatus according to an embodiment of the present invention;
FIG. 4 is a schematic block diagram of a cascaded multi-wavelength light source apparatus according to an embodiment of the present invention;
FIGs. 5A and 5B are another schematic block diagrams of a cascaded multi-wavelength light source apparatus according to embodiments of the present invention;
FIG. 6 is a schematic block diagram of a reflective multi-wavelength light source apparatus according to an embodiment of the present invention; and
FIGs. 7A and 7B are another schematic block diagrams of a reflective multi-wavelength light source apparatus according to embodiments of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that, the technical solution of the embodiments of the present invention may be applied to various communications systems, such as fixed access network (Fixed Access), core network (Core Network), data communications network (Data Communication), transport network (Transport Network) or radio access network (Radio Access), and other communications systems, especially wavelength-division multiplexing-passive optical network (Wavelength-Division Multiplexing-Passive Optical Network, WDM-PON for short) systems in fixed access networks, density wavelength-division multiplexing systems (Density Wavelength-Division Multiplexing, DWDM for short) and optical transport network (Optical Transport Network, OTN for short) systems in transport networks, or cloud radio access networks (Cloud Radio Access Network, C-RAN for short) systems in radio access networks (Radio Access).

It should be understood that, the embodiments of the present invention are described by using only an optical communications application scenario as an example, but the embodiments of the present invention are not limited thereto. A multi-wavelength light source apparatus of the embodiments of the present invention may be further applied to other application scenarios where a multi-wavelength light source apparatus is needed.

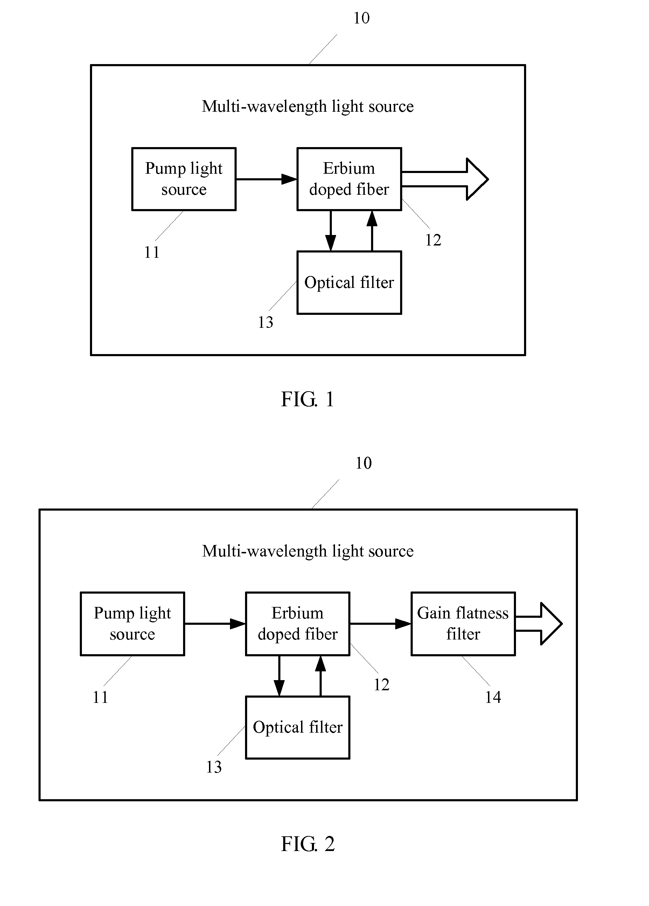

FIG. 1 is a schematic block diagram of a multi-wavelength light source apparatus 10 according to an embodiment of the present invention. As shown in FIG. 1, the multi-wavelength light source apparatus 10 includes: a pump light source 11, an erbium-doped optical fiber 12 and an optical filter 13. The pump light source 11 is configured to provide pump light. The erbium-doped optical fiber 12 is configured to absorb energy of the pump light and emit wide-spectrum laser light. The optical filter 13 is configured to filter the wide-spectrum laser light, and output a multi-wavelength optical signal in a free spectral range of the optical filter 13. The multi-wavelength optical signal is incident on the erbium-doped optical fiber 12. The erbium-doped optical fiber 12 is further configured to re-amplify and output the incident multi-wavelength optical signal.

Specifically, the pump light output by the pump light source 11 is incident on the erbium-doped optical fiber 12, where erbium ions in the erbium-doped optical fiber 12 absorb the energy of the pump light, and then are pumped to a higher energy level to generate spontaneous emissions, and emit wide-spectrum laser light. The wide-spectrum laser light is incident on the optical filter 13, and the optical filter 13 filters the wide-spectrum laser light and outputs a multi-wavelength optical signal with a required wavelength. The multi-wavelength optical signal is finally re-amplified and output by the erbium-doped optical fiber 12.

Therefore, in the multi-wavelength light source apparatus of the embodiment of the present invention, the optical filter is capable of selectively outputting the optical signal with the required wavelength, and transmitting the optical signal to the erbium-doped optical fiber for re-amplification, so that spectral energy of the output light is concentrated, and power of the output light is increased. In addition, the multi-wavelength light source apparatus in the embodiment of the present invention is insensitive to polarization, and has a simple structure and low costs.

In the embodiment of the present invention, the wide-spectrum laser light including the required wavelength may be generated by controlling a doping density of erbium ions in the erbium-doped optical fiber 12. For example, after absorbing the energy of the pump light, the erbium-doped optical fiber 12 may generate wide-spectrum laser light covering a C band or L band, so it can be used in the communications field. For example, for a common C-band erbium-doped optical fiber, the density of erbium ions may be set to 400 ppm (parts per million density) to 600 ppm; and for an L-band erbium-doped optical fiber, the density of erbium ions may be set to be above 1000 ppm.

It should be understood that, in the embodiment of the present invention, the C band or L band is compliant with a related standard defined by the Telecommunication Standardization Sector (ITU-T) of the International Telecommunication Union (International Telecommunication Union, ITU for short). Specifically, the C band may refer to optical signals with a wavelength in a range from 1528 nm to 1565 nm; and the L band may refer to optical signals with a wavelength in a range from 1565 nm to 1625 nm.

In the embodiment of the present invention, optionally, the pump light source 11 is a pump laser that provides pump light with a central wavelength of 980 nm. That is, the wavelength or the central wavelength of pump light output by the pump light source 11 is 980 nm. The pump laser may also be referred to as a 980-nm pump laser. It should be understood that, the pump light source may also be a light source providing pump light of other wavelengths, and the embodiment of the present invention is not limited in this aspect.

In the embodiment of the present invention, optionally, the optical filter 13 is a Fabry-Perot filter (Fabry-Perot etalon Filter). The Fabry-Perot filter may also be referred to as a Fabry-Perot etalon filter, or referred to as an FP filter. In order to make the multi-wavelength light source apparatus in the embodiment of the present invention applicable to the optical communications field, the free spectral range (Free Spectral Range, FSR for short) of the optical filter 13 may be designed to be compliant with ITU-T-defined wavelength points, and may also be designed to be compliant with other required wavelengths.

In the embodiment of the present invention, optionally, the free spectral range FSR of the optical filter 13 is 50 GHz or 100 GHz. It should be understood that, in the embodiment of the present invention, the required frequency spacing FSR may be designed by selecting a refractive index of an FP resonant cavity of the Fabry-Perot filter and a length of the FP resonant cavity.

Specifically, for example, when the FP resonant cavity is an air medium, that is, the refractive index of the FP resonant cavity is 1, if an FP filter with a frequency spacing of 50 GHz needs to be designed, the length of the FP resonant cavity may be designed to 2.99792458 mm; and if an FP filter with a frequency spacing of 100 GHz needs to be designed, the length of the FP resonant cavity may be designed to 1.49896229 mm.

It should be understood that, according to application requirements, the optical filter may have other free spectral ranges, and may also adopt a filter, other than the FP filter, that can selectively output an optical signal within a specific frequency spacing or FSR. The embodiment of the present invention is not limited in this aspect.

In the embodiment of the present invention, optionally, a wavelength of the multi-wavelength optical signal falls in a range from 1528 nm to 1565 nm, or in a range from 1565 nm to 1625 nm. That is, in the embodiment of the present invention, the free spectral range of the optical filter can be determined by selecting the doping density of erbium ions in the erbium-doped optical fiber, so that the wavelength of the optical signal output by the multi-wavelength light source apparatus mainly falls in a range from 1528 nm to 1565 nm or in a range from 1565 nm to 1625 nm.

In the embodiment of the present invention, optionally, as shown in FIG. 2, the multi-wavelength light source apparatus 10 further includes:
a gain flatness filter 14, configured to filter the multi-wavelength optical signal output by the optical filter 13, and output the filtered multi-wavelength optical signal to the erbium-doped optical fiber 12 for re-amplification.

Specifically, as shown in FIG. 2, the gain flatness filter 14 may be disposed between the erbium-doped optical fiber 12 and an output end of the multi-wavelength light source apparatus 10, the multi-wavelength optical signal re-amplified and output by the erbium-doped optical fiber 12 is re-filtered and output by the gain flatness filter 14, to balance power of different wavelengths output by the multi-wavelength light source apparatus 10, so that the spectral energy of the output light of the multi-wavelength light source apparatus 10 is more uniform and more concentrated.

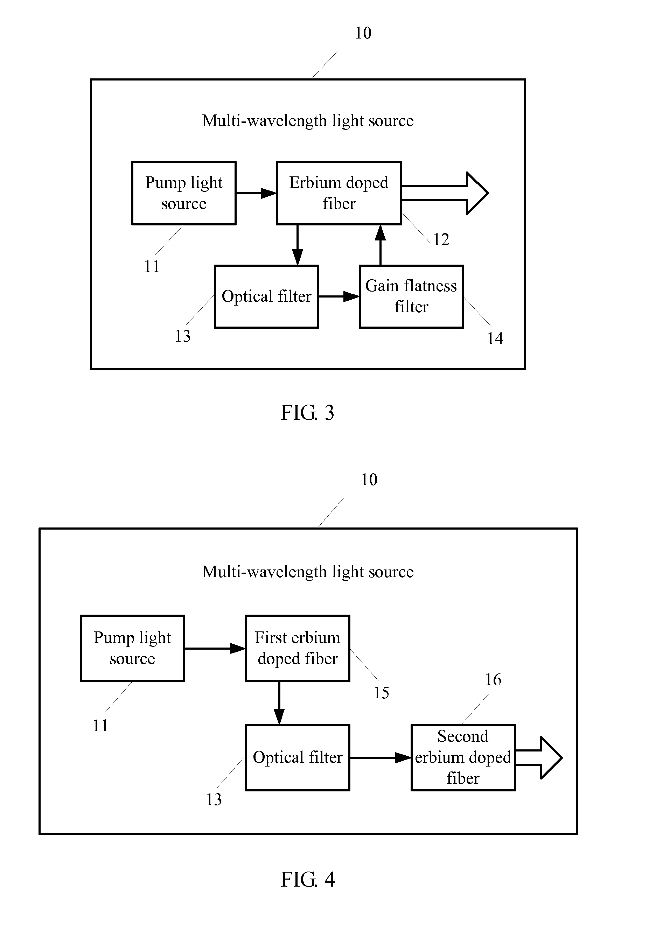

In the embodiment of the present invention, optionally, as shown in FIG. 3, the multi-wavelength light source apparatus 10 further includes:
a gain flatness filter 14, configured to filter the multi-wavelength optical signal re-amplified and output by the erbium-doped optical fiber 12.

Specifically, as shown in FIG. 3, the gain flatness filter 14 may be disposed between the optical filter 13 and the erbium-doped optical fiber 12, and is configured to filter the multi-wavelength optical signal output by the optical filter 13, and output the multi-wavelength optical signal filtered by the optical filter 13 to the erbium-doped optical fiber 12 for re-amplification, to balance power of different wavelengths output by the multi-wavelength light source apparatus 10, so that the spectral energy of the output light of the multi-wavelength light source apparatus 10 is more uniform and more concentrated.

It should be understood that, in the embodiment of the present invention, the gain flatness filter 14 may be configured to filter the multi-wavelength optical signal output by the optical filter 13, and output the filtered multi-wavelength optical signal to the erbium-doped optical fiber 12 for re-amplification, and may also be configured to filter the multi-wavelength optical signal re-amplified and output by the erbium-doped optical fiber 12.

It should be understood that, in the embodiment of the present invention, according to the specific structural design of the multi-wavelength light source apparatus, the gain flatness filter may also be disposed in another position, to balance the power of different wavelengths. The embodiment of the present invention is not limited in this aspect.

Therefore, in the multi-wavelength light source apparatus of the embodiment of the present invention, the optical filter is capable of selectively outputting the optical signal with the required wavelength, and transmitting the optical signal to the erbium-doped optical fiber for re-amplification, so that spectral energy of the output light is concentrated and uniform, and the power of the output light is increased. In addition, the multi-wavelength light source apparatus in the embodiment of the present invention further is insensitive to polarization, and has a simple structure and low costs.

In the embodiment of the present invention, a cascaded structure or a reflective structure may be adopted to transmit the multi-wavelength optical signal output by the optical filter to the erbium-doped optical fiber for re-amplification and output. A cascaded multi-wavelength light source apparatus and a reflective multi-wavelength light source apparatus according to embodiments of the present invention are separately described hereinafter in detail with reference to FIG. 4 to FIG. 7B.

FIG. 4 is a schematic block diagram of a cascaded multi-wavelength light source apparatus according to an embodiment of the present invention. As shown in FIG. 4, in the embodiment of the present invention, optionally, the erbium-doped optical fiber 12 includes a first erbium-doped optical fiber 15 and a second erbium-doped optical fiber 16. The first erbium-doped optical fiber 15 is disposed between the pump light source 11 and the optical filter 13, and is configured to generate the wide-spectrum laser light. The second erbium-doped optical fiber 16 is configured to re-amplify and output the multi-wavelength optical signal output by the optical filter 13.

It should be understood that, in the embodiment of the present invention, "first" and "second" are merely used to refer to different components, and should not limit the quantity or function of the components. For example, both the first erbium-doped optical fiber and the second erbium-doped optical fiber may include one or more erbium-doped optical fibers.

That is, in the embodiment of the present invention, the multi-wavelength optical signal can be re-amplified by using at least two erbium-doped optical fibers, so as to concentrate the spectral energy and increase output power.

In the embodiment of the present invention, optionally, the multi-wavelength light source apparatus 10 further includes:
an optical splitter, configured to split the pump light emitted by the pump light source into two parts, where first part pump light is incident on the first erbium-doped optical fiber, and second part pump light is incident on the second erbium-doped optical fiber; and
a first wavelength-division multiplexer, configured to combine the second part pump light with the multi-wavelength optical signal output by the optical filter, and transmit the combined light to the second erbium-doped optical fiber.

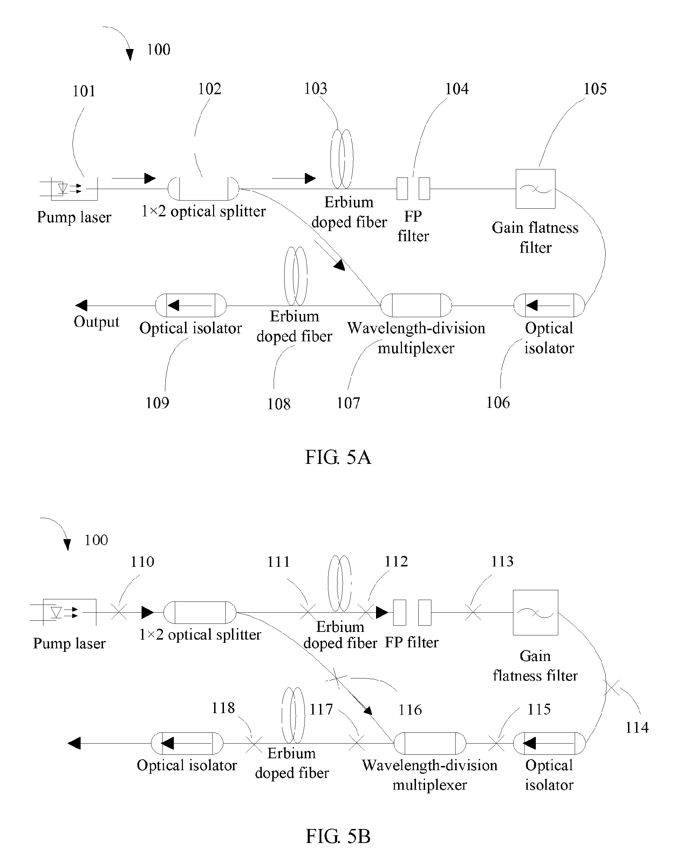

For example, as shown in FIG. 5A, the multi-wavelength light source apparatus 100 includes: a pump laser 101, an optical splitter 102, an erbium-doped optical fiber 103 (that is, the first erbium-doped optical fiber), an FP filter 104, a gain flatness filter 105, a wavelength-division multiplexer 107 (that is, the first wavelength-division multiplexer) and an erbium-doped optical fiber 108 (that is, the second erbium-doped optical fiber).

The pump laser 101 may emit pump light of about 980 nm, and power of the pump light may be between 150 mW and 500 mW. The pump light may be split into two parts by the optical splitter 102, and the two parts of pump light may be separately injected to the erbium-doped optical fibers (EDF) 103 and 108. For example, the operating wavelength range of the optical splitter 102 is 960 nm to 990 nm, and the splitting ratio is, for example, 50%. In the erbium-doped optical fiber 103, erbium ions in the erbium-doped optical fiber absorb energy of the pump light, and then are pumped to a higher energy level. Then, spontaneous emissions (ASE) are generated to emit a wide-spectrum laser light. The wide-spectrum laser light may include optical signals in the range of the C band (1528 nm-1565 nm) or the L band (1565 nm-1625 nm), so it can be used in the communications field.

The wide-spectrum laser light may be filtered by the Fabry-Perot etalon filter 104. The FP filter 104 has an FSR of, for example, 50 GHz or 100 GHz, and the operating wavelength range is, for example, 1520 nm to 1630 nm. The multi-wavelength optical signal output by the FP filter 104 and a part of pump light split by the optical splitter 102 may be combined by the wavelength-division multiplexer 107, and the combined light is incident on the erbium-doped optical fiber 108 for re-amplification, so as to improve the power of the output light and concentrate the energy to a useful band.

Optionally, the multi-wavelength optical signal filtered by the FP filter 104 may be first re-filtered by the gain flatness filter (Gain Flatness Filter, GFF for short) 105, so as to balance power of different wavelengths. Then, the multi-wavelength optical signal filtered by the gain flatness filter 105 and a part of pump light split by the optical splitter 102 may be combined by the wavelength-division multiplexer 107, and the combined light is incident on the erbium-doped optical fiber 108 for re-amplification, so as to improve the power of the output light and concentrate the energy to a useful band.

In the embodiment of the present invention, optionally, the multi-wavelength light source apparatus 10 further includes:
a first optical isolator, disposed between the optical filter and the first wavelength-division multiplexer; and
a second optical isolator, disposed between the second erbium-doped optical fiber and the output end of the multi-wavelength light source apparatus.

For example, as shown in FIG. 5A, the multi-wavelength light source apparatus 100 may further include an optical isolator 106 (that is, the first optical isolator) and an optical isolator 109 (that is, the second optical isolator). The optical isolators 106 and 109 are configured to isolate optical signals in a light path to prevent the optical signals from being reflected. It should be understood that, in the embodiment of the present invention, multiple optical isolators may also be disposed to prevent optical signals in the light path from being reflected. The embodiment of the present invention is not limited in this aspect.

FIG. 5B illustrates connections between optical components of the cascaded multi-wavelength light source apparatus 100 according to an embodiment of the present invention. As shown in FIG. 5B, fiber splice points between different optical components are illustrated by 110 to 118. Specifically, 110 is a fiber splice point between the pump laser 101 and the optical splitter 102; 111 is a fiber splice point between the optical splitter 102 and the erbium-doped optical fiber 103; 112 is a fiber splice point between the erbium-doped optical fiber 103 and the FP filter 104; 113 is a fiber splice point between the FP filter and the gain flatness filter 105; 114 is a fiber splice point between the gain flatness filter 105 and the optical isolator 106; 115 is a fiber splice point between the optical isolator 106 and the wavelength-division multiplexer 107; 116 is a fiber splice point between the optical splitter 102 and the wavelength-division multiplexer 107; 117 is a fiber splice point between the wavelength-division multiplexer 107 and the erbium-doped optical fiber 108; and 118 is a fiber splice point between the erbium-doped optical fiber 108 and the optical isolator 109.

It should be understood that, the connections between components illustrated in FIG. 5B are only exemplary, the components may also have fiber splice points in other positions, or may have other fiber splice points and structures. The embodiment of the present invention is not limited in this aspect.

Therefore, in the multi-wavelength light source apparatus of the embodiment of the present invention, the optical filter is capable of selectively outputting the optical signal with the required wavelength, and transmitting the optical signal to the erbium-doped optical fiber for re-amplification, so that spectral energy of the output light is concentrated, and power of the output light is increased. In addition, the multi-wavelength light source apparatus in the embodiment of the present invention is insensitive to polarization, and has a simple structure and low costs.

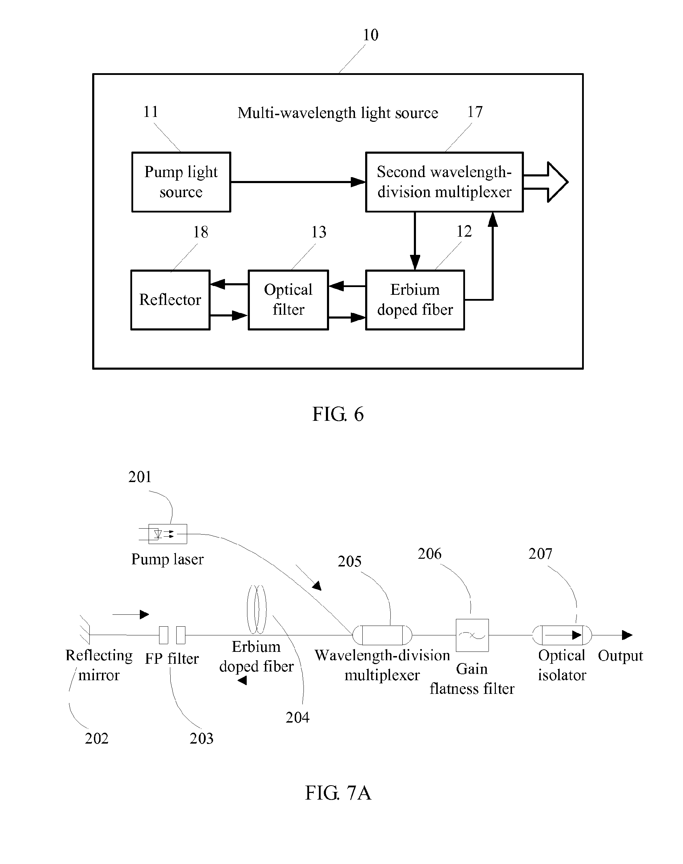

The cascaded multi-wavelength light source apparatus according to the embodiment of the present invention has been described in detail with reference to FIG. 4 to FIG. 5B, and the reflective multi-wavelength light source apparatus according to an embodiment of the present invention is described hereinafter with reference to FIG. 6 to FIG. 7B.

As shown in FIG. 6, a reflective multi-wavelength light source apparatus 10 according to an embodiment of the present invention further includes a second wavelength-division multiplexer 17 and a reflector 18. The pump light emitted by the pump light source 11 passes through the second wavelength-division multiplexer 17, and then is incident on the erbium-doped optical fiber 12. The multi-wavelength optical signal output by the optical filter 13 is reflected back to the optical erbium-doped optical fiber 12 by the reflector 18, re-amplified by the erbium-doped optical fiber 12, and output by the second wavelength-division multiplexer 17.

Specifically, the reflector 18 is, for example, a reflecting mirror, or another component with a reflective feature. An operating wavelength of the reflector 18 is, for example, in a range from 1500 nm to 1700 nm, and a reflectivity of the reflector 18 is, for example, 100%.

Optionally, in the embodiment of the present invention, the multi-wavelength light source apparatus 10 further includes: a third optical isolator, disposed between the second wavelength-division multiplexer and the output end of the multi-wavelength light source apparatus, to isolate optical signals in a light path to prevent the optical signals from being reflected.

It should be understood that the first optical isolator, second optical isolator, or third optical isolator may include one or more optical isolators. It should also be understood that optical isolators may also exist between other components of the multi-wavelength light source apparatus of the embodiment of the present invention. The embodiment of the present invention is not limited in this aspect.

For example, as shown in FIG. 7A, the multi-wavelength light source apparatus 200 includes: a pump laser 201, a reflecting mirror 202, an FP filter 203, an erbium-doped optical fiber 204, a wavelength-division multiplexer 205, a gain flatness filter 206, and an optical isolator 207.

The pump laser 201 may emit pump light power of about 980 nm, and the light passes through the wavelength-division multiplexer 205, and then is injected to the erbium-doped optical fiber (EDF) 204. In the erbium-doped optical fiber 204, erbium ions in the erbium-doped optical fiber absorb energy of the pump light, and then are pumped to a higher energy level. Then, spontaneous emissions (ASE) are generated to emit a wide-spectrum optical signal. The wide-spectrum optical signal is filtered by the Fabry-Perot etalon filter 203, reflected back to the erbium-doped optical fiber 204 by the reflecting mirror 202, and re-amplified in the erbium-doped optical fiber 204. The amplified multi-wavelength optical signal may pass through the wavelength-division multiplexer 205, be filtered by the gain flatness filter 206 and finally output by the isolator 207.

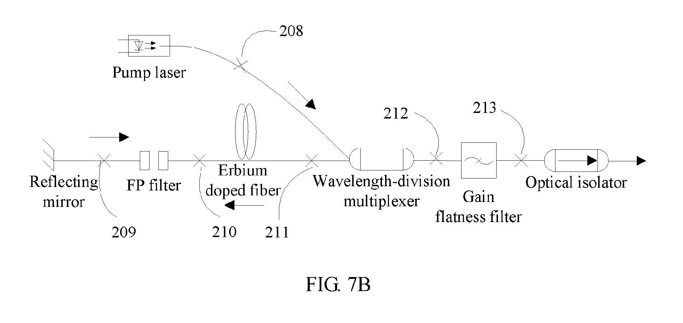

FIG. 7B illustrates connections between optical components of the reflective multi-wavelength light source apparatus 200 according to an embodiment of the present invention. As shown in FIG. 7B, 208, 209, 210, 211, 212 and 213 separately are fiber splice points between the optical components, and for simplicity, details are not described herein again.

It should be understood that, the foregoing or other operations and/or functions of some components of the reflective multi-wavelength light source apparatus 200 according to the embodiment of the present invention are the same as or similar to those of the corresponding components of the cascaded multi-wavelength light source apparatus 100 according to the embodiment of the present invention, and for simplicity, details are not described herein again.

It should be further understood that, the embodiments of the present invention are described by using only the cascaded multi-wavelength light source apparatus 100 and the reflective multi-wavelength light source apparatus 200 as examples. The multi-wavelength light source apparatus 10 according to the embodiments of the present invention may also have other structures, and the embodiment of the present invention is not limited in this aspect.

Therefore, in the multi-wavelength light source apparatus of the embodiment of the present invention, the optical filter is capable of selectively outputting the optical signal with the required wavelength, and transmitting the optical signal to the erbium-doped optical fiber for re-amplification, so that spectral energy of the output light is concentrated, and power of the output light is increased. In addition, the multi-wavelength light source apparatus in the embodiments of the present invention is insensitive to polarization, and has a simple structure and low costs.

A person of ordinary skill in the art may be aware that, with reference to the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected to achieve the objective of the solution of the embodiment of the present invention according to actual needs.

In addition, functional units in the embodiments of the present invention may be integrated into one processing unit, or each of the units may exist alone physically, or two or more units may be integrated into one unit. The foregoing integrated units may be implemented by hardware.

The foregoing descriptions are merely specific embodiments of the present invention, but are not intended to limit the protection scope of the present invention. Any equivalent modification or replacement readily figured out by a person skilled in the art within the technical scope of the present invention shall fall within the protection scope of the present invention. Therefore, the protection scope of the present invention shall be subject to the protection scope of the claims.

## Claims

1. A multi-wavelength light source apparatus, comprising:
a pump light source, configured to provide pump light;
an erbium-doped optical fiber, configured to absorb energy of the pump light and emit wide-spectrum laser light; and
an optical filter, configured to filter the wide-spectrum laser light, and output a multi-wavelength optical signal in a free spectral range of the optical filter;
wherein the multi-wavelength optical signal is incident on the erbium-doped optical fiber, and the erbium-doped optical fiber is further configured to re-amplify and output the incident multi-wavelength optical signal.

2. The multi-wavelength light source apparatus according to claim 1, wherein the multi-wavelength light source apparatus further comprises:
a gain flatness filter, configured to filter the multi-wavelength optical signal output by the optical filter, and output the filtered multi-wavelength optical signal to the erbium-doped optical fiber for re-amplification.

3. The multi-wavelength light source apparatus according to claim 1, wherein the multi-wavelength light source apparatus further comprises:
a gain flatness filter, configured to filter the multi-wavelength optical signal re-amplified and output by the erbium-doped optical fiber.

4. The multi-wavelength light source apparatus according to any one of claims 1 to 3, wherein the erbium-doped optical fiber comprises a first erbium-doped optical fiber and a second erbium-doped optical fiber, wherein the first erbium-doped optical fiber is disposed between the pump light source and the optical filter, and is configured to generate the wide-spectrum laser light; and the second erbium-doped optical fiber is configured to re-amplify and output the multi-wavelength optical signal output by the optical filter.

5. The multi-wavelength light source apparatus according to claim 4, wherein the multi-wavelength light source apparatus further comprises:
an optical splitter, configured to split the pump light emitted by the pump light source into two parts, wherein first part pump light is incident on the first erbium-doped optical fiber, and second part pump light is incident on the second erbium-doped optical fiber; and
a first wavelength-division multiplexer, configured to combine the second part pump light with the multi-wavelength optical signal output by the optical filter, and transmit the combined light to the second erbium-doped optical fiber.

6. The multi-wavelength light source apparatus according to claim 5, wherein the multi-wavelength light source apparatus further comprises:
a first optical isolator, disposed between the optical filter and the first wavelength-division multiplexer; and
a second optical isolator, disposed between the second erbium-doped optical fiber and an output end of the multi-wavelength light source apparatus.

7. The multi-wavelength light source apparatus according to any one of claims 1 to 3, wherein the multi-wavelength light source apparatus further comprises a second wavelength-division multiplexer and a reflector, wherein the pump light emitted by the pump light source passes through the second wavelength-division multiplexer, and then is incident on the erbium-doped optical fiber, and the multi-wavelength optical signal output by the optical filter is reflected back to the optical erbium-doped optical fiber by the reflector, re-amplified by the erbium-doped optical fiber, and then output by the second wavelength-division multiplexer.

8. The multi-wavelength light source apparatus according to claim 7, wherein the multi-wavelength light source apparatus further comprises:
a third optical isolator, disposed between the second wavelength-division multiplexer and an output end of the multi-wavelength light source apparatus.

9. The multi-wavelength light source apparatus according to any one of claims 1 to 8, wherein the pump light source is a pump laser that provides pump light with a central wavelength of 980 nm.

10. The multi-wavelength light source apparatus according to any one of claims 1 to 8, wherein the optical filter is a Fabry-Perot filter.

11. The multi-wavelength light source apparatus according to any one of claims 1 to 8, wherein a wavelength of the multi-wavelength optical signal falls in a range from 1528 nm to 1565 nm, or in a range from 1565 nm to 1625 nm.
